# EUROPÄISCHE PATENTSCHRIFT

(11) **EP 1 211 434 B1**
(45) Veröffentlichungstag und Bekanntmachung des Hinweises auf die Patenterteilung: **20.12.2006**
(21) Anmeldenummer: 01125842.3
(22) Anmeldetag: 30.10.2001
(51) Int. Cl.: F16H 1/16, F16H 57/00

(54) **Getriebe-Antriebseinheit und Verfahren zur Dichtheitsprüfung derselben**
Drive unit and method for leak-testing the same
Unité transmission-entraînement et méthode pour tester son étanchéité

(30) Priorität: 29.11.2000 DE 10059298
(43) Veröffentlichungstag der Anmeldung: 05.06.2002
(73) Patentinhaber: ROBERT BOSCH GMBH, 70442 Stuttgart (DE)
(72) Erfinder: Schwendemann, Franz, 77833 Ottersweier (DE); Schneider, Dariusz, 77836 Rheinmünster (DE)

(56) Entgegenhaltungen:
- EP-A- 0 860 572
- DE-A- 19 541 913
- DE-U- 8 903 713
- DE-U- 29 914 863
- US-A- 3 858 458
- US-A- 5 957 000
- PATENT ABSTRACTS OF JAPAN Bd. 1995, Nr. 09, 31. Oktober 1995 (1995-10-31) & JP 7 150925 A (TOCHIGI FUJI IND CO LTD), 13. Juni 1995 (1995-06-13)
- VIVARAT-PERRIN M-P: "DETERMINER UN SEUIL DE FUITE RIGOUREUX MAIS PAS TROP" MESURES REGULATION AUTOMATISME, CFE. PARIS, FR, Nr. 710, Dezember 1998 (1998-12), Seiten 85-87, XP000871393 ISSN: 0755-219X

## Beschreibung

### Stand der Technik

Die Erfindung betrifft eine Getriebe-Antriebseinheit und ein Verfahren zur Dichtheitsprüfung derselben nach der Gattung der unabhängigen Ansprüche.

Mit der EP 0 860 572, die als nächstliegender Stand der Technik gegenüber dem Gegenstand der unabhängigen Ansprüche 1 und 7 angesehen wird, ist eine Antriebsvorrichtung für Abdeckglieder von Öffnungen in Fahrzeugen, wie z.B. Fensterscheiben oder Schiebedächer, bekannt geworden. Dabei ist auf einer drehfesten Achse im Getriebegehäuse ein von einer Schnecke angetriebenes Abtriebsrad gelagert, das eine bauliche Einheit mit einer Seiltrommel bildet. Das Abtriebsrad ist in seinem äußeren Rand gegen die Wandung des Getriebegehäuses abgedichtet und bildet gleichzeitig eine Art Deckel für das Getriebegehäuse. Zur festen Achse hin ist das Abtriebsrad mittels eines Radialdichtrings abgedichtet und mit einem in eine Nut eingesetzten Sprengring axial fixiert. Für den Einsatz im Kraftfahrzeug ist es wichtig, dass die Getriebe-Antriebseinheit gegenüber eindringendem Wasser und Schmutz dicht ist. Hierzu wird das Getriebegehäuse gewöhnlich einer Dichtheitsprüfung unterzogen, bei der vor der Montage des Radialdichtrings auf die Achse der Gehäuseinnenraum mit einem Prüfdruck beaufschlagt wird. Dabei muss Luft durch die Spielzwischenräume zwischen Achse und Abtriebsrad hindurchgepresst werden. Dadurch benötigt man bei der Dichtheitsprüfung eine relativ lange Zeit zur Druckbeaufschlagung. Außerdem befindet sich zwischen der Achse und dem Abtriebsrad normalerweise Schmierstoff, der das Eindringen von Luft zur Druckbeaufschlagung zusätzlich behindert. Dadurch ergibt sich das Problem relativ hoher Prüfzeiten, was für die industrielle Fertigung einen großen Kostenfaktor darstellt. Reicht die Prüfzeit nicht aus, um im Gehäuseinnenraum einen ausreichenden gleichmäßigen Prüfdruck aufzubauen, führt die Dichtheitsprüfung schlichtweg zu falschen Ergebnissen.

Mit der DE 89 03 713 U ist ein Verstellantrieb bekannt geworden, bei dem ein Abtriebsrad auch auf einer gehäusefesten Achse gelagert ist. Das Abtriebsrad weist an einer axialen Seite eine ringsum laufende Dichtungsnut auf, indem eine Ringdichtung zur Abdichtung gegen ein Gehäuseteil angeordnet ist.

Die JP 7 150925 A zeigt eine Lüftervorrichtung, bei dem eine Lüfterscheibe innerhalb eines geschlossenen Gehäuses angeordnet ist. In der Lüfterscheibe sind radiale Lüftungsrillen angeordnet, die im Betrieb eine radiale Pumpwirkung bezüglich Schmiermitteltropfen erzeugen.

### Vorteile der Erfindung

Die erfindungsgemäße Vorrichtung mit den Merkmalen des Anspruchs 1 hat demgegenüber den Vorteil, dass der Gehäuseinnenraum der Getriebe-Antriebseinheit durch einen Luftkanal in dem mindestens einen Abtriebsrad sehr schnell und zuverlässig mit einem Prüfdruck beaufschlagt werden kann. Da der Luftkanal eine direkte Verbindung zum Prüfvolumen herstellt, kann die Prüfzeit deutlich verringert werden. Fehler bei der Dichtheitsprüfung durch unzureichende Druckbeaufschlagung können wirksam verhindert werden.

Durch die in den Unteransprüchen aufgeführten Merkmale sind vorteilhafte Weiterbildungen der Vorrichtung nach Anspruch 1 möglich. Besonders günstig ist es, wenn der Luftkanal so angeordnet ist, dass er mit dem ohnehin vorhandenen Dichtring zwischen Achse und Abtriebsrad ebenfalls abgedichtet werden kann. Dadurch erübrigen sich zusätzliche Bauteile oder Montageschritte. Somit können bei unveränderter Montage und unverändertem Dichtheitsprüfverfahren deutlich schnellere und zuverlässigere Prüfergebnisse erzielt werden.

Durch die getrennte Anordnung von Luftkanal und Achsöffnung bleibt der volle Umfang der Nabe des Abtriebsrades über zumindest einen wesentlichen Bereich deren Tiefe erhalten. Damit ist eine sehr präzise, verschleißarme Lagerung des Abtriebsrades gewährleistet.

Besonders vorteilhaft für die Herstellung des Abtriebsrades ist es, wenn der Luftkanal im wesentlichen über seine gesamte Länge zur Achsöffnung geöffnet ist. Dadurch hat das Abtriebsrad nur ein Loch, was fertigungstechnisch sehr einfach zu handhaben ist. Durch die unmittelbare Nähe des Luftkanals zur Achsöffnung ist auch ein Abdichten des Luftkanals mit dem Radialdichtring problemlos möglich.

Ein ringsegmentförmiger Querschnitt des Luftkanals ist besonders vorteilhaft, um mit dem Radialdichtring der Achse abgedichtet zu werden. Außerdem bleibt dabei der Umfang der Nabe weitestmöglich erhalten, was für eine zuverlässige Lagerung des Abtriebsrades auf der Achse günstig ist.

Besonders günstig ist die Fertigung des Abtriebsrad aus Kunststoff, im besonderen das Spritzen desselben, weil dabei der Luftkanal ohne zusätzlichen Aufwand in einem Guß mit dem Abtriebsrad gegossen werden kann. Aber auch für die Gleiteigenschaften des Abtriebsrades auf der Achse und für die verschiedenen Ausführungsformen des Abtriebsrad bietet Kunststoff große Vorteile.

Das erfindungsgemäße Verfahren mit den Merkmalen des unabhängigen Anspruchs 7 hat den Vorteil, dass die Getriebe-Antriebseinheit schnell und zuverlässig auf Dichtigkeit geprüft werden kann, ohne die bisherige Prüfeinrichtung zu verändern. Durch das Anpressen der Dichtungsglocke an das Abtriebsrad wird der Innenraum des Gehäuses schnell und gleichmäßig mit einem Prüfdruck beaufschlagt, der dann auf einen Druckabfall hin überprüft wird. Mit der Montage des Dichtrings auf die Achse wird der Luftkanal wirksam abgedichtet. Mit diesem Prüfverfahren kann deshalb ohne Mehraufwand wertvolle Prüfzeit eingespart und die Prüfergebnisse verbessert werden.

### Zeichnung

In der Zeichnung sind zwei Ausführungsbeispiele einer erfindungsgemäßen Vorrichtung dargestellt und in den nachfolgenden Beschreibungen näher erläutert.

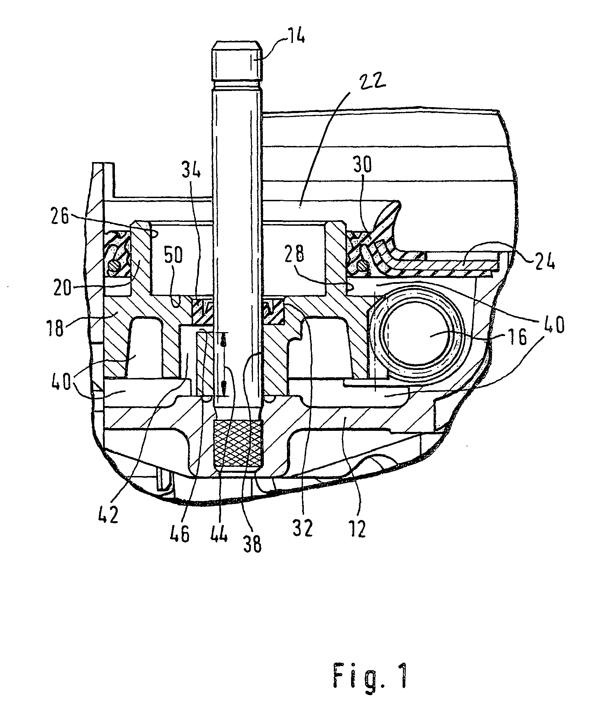

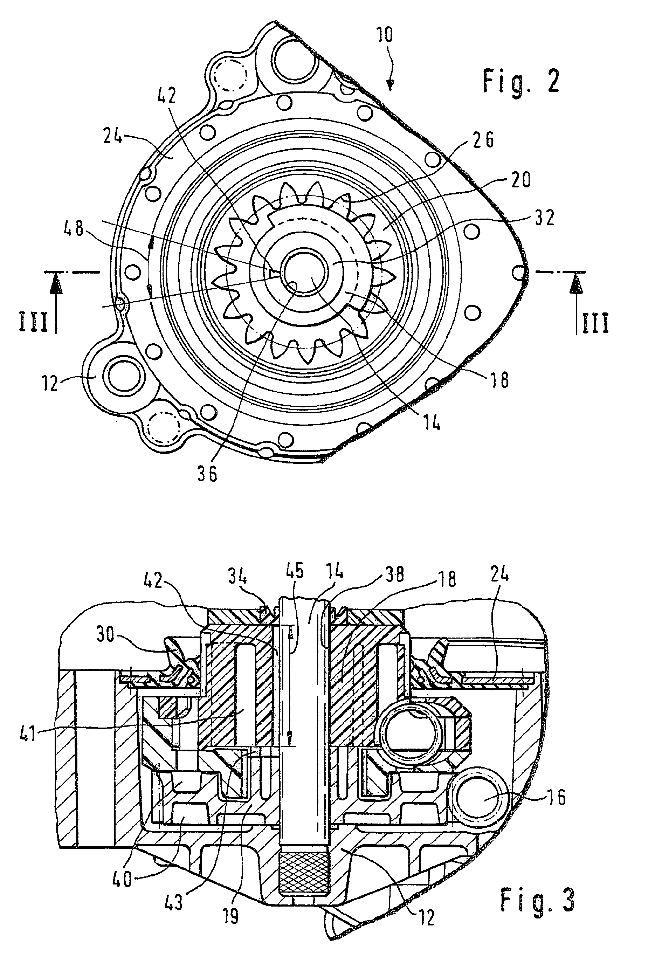

Es zeigen Figur 1 ein erstes Ausführungsbeispiel einer Getriebe-Antriebseinheit im Axialschnitt, Figur 2 ein zweites Ausführungsbeispiel in der Draufsicht und Figur 3 einen Schnitt entlang der Linie III-III in Figur 2 gemäß Figur 1.

### Beschreibung

Das in Figur 1 dargestellte Ausführungsbeispiel zeigt einen Ausschnitt einer erfindungsgemäßen Getriebe-Antriebseinheit 10, mit einem Getriebegehäuse 12, in das drehfest eine Achse 14 eingespritzt ist. Eine von einem nicht dargestellten Motor angetriebene Schnecke 16 kämmt mit einem Abtriebsrad 18, das zur Lagerung auf der Achse 14 eine Achsöffnung 38 aufweist. Eire topfartige Ausformung 20 des Abtriebsrades 18 ragt durch eine Öffnung 22 eines deckelartigen Teils 24 des Getriebegehäuses 12. Die topfartige Ausformung 20 des Abtriebsrades 18 weist beispielsweise eine Innenverzahnung 26 zur Kraftübertragung auf ein nicht näher dargestelltes zu verstellendes Teil auf. Die Außenwand 28 der topfartigen Ausformung 20 ist gegenüber dem deckelartigen Teil 24 des Getriebegehäuses 12 mittels eines ringförmigen Dichtelements 30 abgedichtet, um ein Eindringen von Wasser und Schmutz in das Innere der Getriebe-Antriebseinheit 10 zu verhindern. Um die Achse 14 gegenüber dem Abtriebsrad 18 abzudichten, ist in einer Senkung 32 des Abtriebsrades 18 ein Dichtring 34 angeordnet. Im Ausführungsbeispiel dichtet der Dichtring 34 den Spielzwischenraum zwischen der Achse 14 und der eine Nabe bildenden Innenwand 36 der Achsöffnung 38 in radialer Richtung ab.

Um bei einer Dichtheitsprüfung den Innenraum 40 der Getriebe-Antriebseinheit 10 schnell und zuverlässig mit einem Prüfdruck zu beaufschlagen, weist das Abtriebsrad 18 einen Luftkanal 42 auf. Dieser verbindet den Innenraum 40 bei nicht montiertem Dichtring 34 über die Senkung 32 mit der Umgebung der Getriebe-Antriebseinheit 10. Im Ausführungsbeispiel ist der Luftkanal 42 parallel versetzt zur Achse 14 ausgebildet, so dass die Achsöffnung 38 über einen wesentlichen Bereich 44 der Tiefe derselben in ihrer Rundheit nicht beeinträchtigt wird. Lediglich direkt unterhalb der Senkung 32 gibt es einen Durchbruch 46 des Luftkanals 42 zur Achsöffnung 38.

In einer Variation des Ausführungsbeispiels ist der Luftkanal 42 schräg zur Achse 14 angeordnet. Dabei kann der Luftkanal 42 ebenfalls mit dem Dichtring 34 abgedichtet werden. In einer weiteren Variation ist der Abstand des Luftkanals 42 zur Achse 14 so groß, dass er nicht mehr mittels des Dichtrings 34 abgedichtet werden kann. Hierbei wird dann der Luftkanal 42 nach der Dichtheitsprüfung mit einem separaten Dichtelement abgedichtet. Selbstverständlich kann das Abtriebsrad 18 auch mehrere Luftkanäle 42 aufweisen.

Figur 2 zeigt in der Draufsicht einen Ausschnitt einer Getriebe-Antriebseinheit 10 eines weiteren Ausführungsbeispiels mit zwei miteinander gekoppelten Abtriebsrädern 18, 19. Aus dem deckelartigen Teil 24 des Getriebegehäuses 12 ragt die topfartige Ausformung 20 eines ersten Abtriebsrades 18 für den kraftübertragenden Eingriff eines Abtriebsritzels. Um die Achse 14 ist eine ringförmige Senkung 32 für die Montage des Dichtrings 34 ausgeformt. Ausgehend vom Boden der Senkung 32 ist in dem Abtriebsrad 18 entlang der Achse 14 ein Luftkanal 42 mit ringsegmentförmigem Querschnitt über die gesamte Tiefe der Achsöffnung 38 ausgeformt.

Dieser Luftkanal 42 ist ebenfalls im axialen Schnitt in Figur 3 dargestellt. Man erkennt hier, dass der Luftkanal 42 über seine gesamte Länge 45 zur Achsöffnung 38 hin offen ist. Damit bildet der Luftkanal 42 gemeinsam mit der Achsöffnung 38 eine gemeinsame Öffnung über die gesamte Tiefe der Achsöffnung 38 des oberen Abtriebrades 18. Dies ist für das aus Kunststoff gespritzte Abtriebsrad 18, besonders einfach herzustellen. Die Innenwandung 36 der Achsöffnung 38 liegt hierbei nicht mehr rundum an der Achse 14 an. Jedoch hat der kleine Winkelbereich 48, in dem kein direkter Kontakt zwischen Achse 14 und der Innenwandung 36 möglich ist, keinerlei beeinträchtigende Auswirkungen auf die Lagerung des Abtriebsrades 18. Bei dieser Anordnung des Luftkanals 42 direkt entlang der Achse 14 wird dieser ebenfalls mit einem Dichtring 34 in der Senkung 32 des Abtriebsrades 18 abgedichtet.

In Figur 3 ist zu erkennen, dass der Luftkanal 42 im ersten Abtriebsrad 18 einen Fortsatz 43 in einem zweiten Abtriebsrad 19 findet. Dieser Fortsatz 43 des Luftkanals 42 ist hier rechtwinklig, radial weg von der Achse 14 angeordnet, um die zerklüfteten Bereiche 41 des Innenraums 40 zu erschließen. Der Querschnitt des Fortsatzes 43 ist beliebig ausgebildet, der Fortsatz 43 muß lediglich eine direkte Verbindung der zerklüfteten Innenraumbereiche 41 zum Luftkanal 42, und damit zur Außenumgebung herstellen.

In einer Variation des Ausführungsbeispiels ist der Fortsatz 43 im unteren Teil des ersten Abtriebrades 18 offen zum zweiten Abtriebrad 19 hin ausgebildet, um die Verbindung zu den zerklüfteten Innenraumbereichen 41 herzustellen. D. h. der Luftkanal 42 kann sich zusammen mit seinem Fortsatz 43 über Tiefe eines Abtriebrades 18 oder über mehrere Abtriebsräder 18, 19 erstrecken.

Es können ebenfalls mehrere Luftkanäle 42 angeordnet werden, auch die Form derselbigen ist nicht auf einen ringsegmentförmigen Querschnitt oder eine bestimmte Vorzugsrichtung beschränkt.

Zusammenfassend sei nochmals das Verfahren zur Dichtheitsprüfung beschrieben. Die Getriebe-Antriebseinheit 10 wird bis auf das Abtriebsritzel und den Dichtring 34 komplett montiert. Anschließend wird eine Dichtungsglocke, vorzugsweise gegen den Boden 50 der topfartigen Ausformung 20 des Abtriebsrades 18, gepreßt. Über den Luftkanal 42, 43 - egal ob getrennt oder geöffnet zur Achsöffnung 38 ausgebildet - wird der beliebig zerklüftete Innenraum 40, 41 des Getriebegehäuses 12 schnell und zuverlässig mit einem Prüfdruck beaufschlagt. Dieser Prüfdruck wird über eine gewisse Zeit auf einen eventuellen Druckabfall überwacht. Bleibt der Druck konstant, sind die Dichtheitsanforderungen an das montierte Aggregat 12 erfüllt. Danach wird die Dichtungsglocke abgenommen und der Dichtring 34 montiert. Gegebenenfalls wird dieser Dichtring 34 in einem separaten Prüfgang auf Dichtigkeit untersucht, indem wieder die Konstanz eines mittels einer Dichtungsglocke aufgebrachten Prüfdrucks kontrolliert wird. Da die Ausformung des Abtriebsrades 18 und damit auch des Dichtrings 34 sehr stark je nach Anwendung variieren können, muß die Geometrie der Dichtungsglocke entsprechend angepaßt werden.

Der Bergriff "Luftkanal (42)" bedeutet keinerlei Einschränkung für das Medium, das zur Dichtheitsprüfung verwendet wird. So kann die Druckbeaufschlagung des Innenraums 40 über den Luftkanal 42 beispielsweise auch mit Stickstoff, Wasserstoff, Edelgase oder einem beliebigen anderen Medium realisiert werden.

Die erfindungsgemäße Getriebe-Antriebseinheit 10 wird beispielsweise für die Verstellung von Schiebedächern, Fensterscheiben, Sitzen oder sonstigen beweglichen Teilen des Kraftfahrzeugantriebsstranges eingesetzt. Selbstverständlich ist auch eine Anwendung der Erfindung außerhalb des Kraftfahrzeuges möglich.

## Patentansprüche

1. Getriebe-Antriebseinheit (10) mit einem Getriebegehäuse (12) und mindestens einem, eine Achsöffnung (38) aufweisenden Abtriebsrad (18, 19), das auf einer Achse (14) gelagert ist, und mit einer Öffnung (22) im Getriebegehäuse (12), durch die die Achse (14) herausgeführt ist, **dadurch gekennzeichnet, dass** das mindestens eine Abtriebsrad (18, 19) zur Druckbeaufschlagung des Gehäuseinnenraums (40) mindestens einen Luftkanal (42, 43) aufweist, der sich entlang der Achse (14) über die gesamte axiale Tiefe des Abtriebsrads (18, 19) erstreckt.

2. Getriebe-Antriebseinheit (10) nach Anspruch 1, **dadurch gekennzeichnet, dass** das Abtriebsrad (18) mittels eines Dichtringes (34) gegen die Achse (14) abgedichtet ist, und der Luftkanal (42) so angeordnet ist, dass er mit dem Dichtring (34) abdichtbar ist.

3. Getriebe-Antriebseinheit (10) nach einem der Ansprüche 1 oder 2, **dadurch gekennzeichnet, dass** der Luftkanal (42) mindestens über einen wesentlichen Bereich (44) der Tiefe der Achsöffnung (38) getrennt von derselben angeordnet ist.

4. Getriebe-Antriebseinheit (10) nach einem der Ansprüche 1 oder 2, **dadurch gekennzeichnet, dass** der Luftkanal (42) im wesentlichen über seine gesamte Länge (45) zur Achsöffnung (38) geöffnet ist.

5. Getriebe-Antriebseinheit (10) nach einem der Ansprüche 1 bis 4, **dadurch gekennzeichnet, dass** der Querschnitt des Luftkanals (42) ringsegmentförmig ist.

6. Getriebe-Antriebseinheit (10) nach einem der Ansprüche 1 bis 5, **dadurch gekennzeichnet, dass** das mindestens eine Abtriebsrad (18, 19) mit der Ausformung des Luftkanals (42, 43) aus Kunststoff, vorzugsweise mittels Spritzgußverfahren gefertigt ist.

7. Verfahren zur Dichtheitsprüfung einer Getriebe-Antriebseinheit (10), insbesondere nach einem der Ansprüche 2 bis 6, bestehend aus einem Getriebegehäuse (12), mindestens einem auf einer Achse (14) gelagerten Abtriebsrad (18, 19), das zur Druckbeaufschlagung des Gehäuseinnenraums (40) einen Luftkanal (42, 43) aufweist, einer Öffnung (22) im Getriebegehäuse (12), durch die die Achse (14) herausgeführt wird und einem Dichtring (34), der die Achse (14) gegen das mindestens eine Abtriebsrad (18) abdichtet, wobei das Verfahren die folgenden Schritte enthält:
- die Getriebe-Antriebseinheit (10) wird bis auf den Dichtring (34) fertig montiert
- eine Dichtungsglocke wird an das Abtriebsrad (18) angepresst
- der Gehäuseinnenraum (40) wird über den Luftkanal (42, 43) des mindestens einen Antriebsrades (18, 19) mit Druck beaufschlagt
- das Getriebegehäuse (12) wird auf Druckabfall kontrolliert
- die Dichtungsglocke wird abgenommen
- der Dichtring (34) wird montiert.

## Claims

1. Transmission drive unit (10) having a transmission housing (12), having at least one drive output wheel (18, 19) which has an axle opening (38) and is mounted on an axle (14), and having an opening (22) in the transmission housing (12), the axle (14) extending out through said opening (22), **characterized in that** the at least one drive output wheel (18, 19) has at least one air duct (42, 43), which extends along the axle (14) over the entire axial depth of the drive output wheel (18, 19), for the purpose of pressurizing the housing interior space (40).

2. Transmission drive unit (10) according to Claim 1, **characterized in that** the drive output wheel (18) is sealed off with respect to the axle (14) by means of a sealing ring (34), and the air duct (42) is arranged in such a way that it can be sealed off by the sealing ring (34).

3. Transmission drive unit (10) according to one of Claims 1 or 2, **characterized in that** the air duct (42) is arranged separately from the axle opening (38) over at least a significant region (44) of the depth of said axle opening (38).

4. Transmission drive unit (10) according to one of Claims 1 or 2, **characterized in that** the air duct (42) is open to the axle opening (38) over substantially the entire length (45) of said air duct (42).

5. Transmission drive unit (10) according to one of Claims 1 to 4, **characterized in that** the cross section of the air duct (42) is in the shape of a ring segment.

6. Transmission drive unit (10) according to one of Claims 1 to 5, **characterized in that** the at least one drive output wheel (18, 19) having the shaped cavity of the air duct (42, 43) is made from plastic, preferably by means of an injection moulding process.

7. Method for leak-testing a transmission drive unit (10), in particular according to one of Claims 2 to 6, consisting of a transmission housing (12), at least one drive output wheel (18, 19) which is mounted on an axle (14) and has an air duct (42, 43) for the purpose of pressurizing the housing interior space (40), an opening (22) in the transmission housing (12), the axle (14) extending out through said opening (22), and a sealing ring (34) which seals off the axle (14) with respect to the at least one drive output wheel (18), wherein the method contains the following steps:
- the transmission drive unit (10) is fully assembled apart from the sealing ring (34)
- a sealing cap is pressed onto the drive output wheel (18)
- the housing interior space (40) is pressurized via the air duct (42, 43) of the at least one drive output wheel (18, 19)
- the transmission housing (12) is checked for pressure losses
- the sealing cap is removed
- the sealing ring (34) is mounted.

## Revendications

1. Unité d'entraînement et de transmission (10) comprenant un boîtier de transmission et au moins un pignon de sortie (18, 19) percé d'une ouverture axiale (38) par laquelle le pignon est monté sur un axe (14), ainsi que, dans ce boîtier (12), une ouverture (22) que traverse l'axe (14)
**caractérisée en ce que**
le pignon de sortie (18, 19) au nombre d'un au moins présente, pour mettre sous pression le volume interne de boîtier (40) au moins un canal d'air (42, 43) qui s'étend le long de l'axe (14) sur toute la profondeur axiale du pignon de sortie (18, 19).

2. Unité d'entraînement et de transmission (10) selon la revendication 1,
**caractérisée en ce que**
le pignon de sortie (18) est rendu étanche par rapport à l'axe (14) au moyen d'une bague d'étanchéité (34), et le canal d'air (42) est disposé de manière à pouvoir être obturé par la bague d'étanchéité (34).

3. Unité d'entraînement et de transmission (10) selon la revendication 1 ou 2,
**caractérisée en ce que**
le canal d'air (42) est séparé de l'ouverture axiale (38) sur une partie importante (44) de la profondeur de l'ouverture axiale (38).

4. Unité d'entraînement et de transmission (10) selon la revendication 1 ou 2,
**caractérisée en ce que**
le canal d'air (42), essentiellement sur toute sa longueur (45), est ouvert vers l'ouverture axiale (38).

5. Unité d'entraînement et de transmission (10) selon une des revendications 1 à 4,
**caractérisée en ce que**
la section du canal d'air (42) a la forme d'un segment annulaire.

6. Unité d'entraînement et de transmission (10) selon une des revendications 1 à 5,
**caractérisée en ce que**
le pignon d'entraînement (18, 19) au nombre d'un au moins est réalisé en même temps que le moulage du canal d'air (42, 43) en matière plastique, avantageusement par le procédé d'injection.

7. Procédé de contrôle de l'étanchéité d'une unité d'entraînement et de transmission (10) réalisé notamment selon un des revendications 2 à 6, et qui comprend un boîtier de transmission (12), au moins un pignon de sortie (18, 19) monté sur un axe (14) et présentant un canal d'air (42, 43) pour mettre sous pression le volume interne de boîtier (40), dans le boîtier (12) une ouverture (22) que traverse l'axe (14) et une bague d'étanchéité (34) assurant l'étanchéité de l'axe (14) par rapport au pignon de sortie (18) au nombre d'un au moins, ce procédé comportant les étapes suivantes :
- montage de l'unité d'entraînement et de transmission (10), à l'exception de la bague d'étanchéité (34),
- montage avec pressage, d'une cloche d'étanchéité sur le pignon de sortie (18),
- mise sous pression du volume interne de boîtier (40) à travers le canal d'air (42, 43) du pignon de sortie (18, 19) au nombre d'un au moins,
- contrôle d'absence de chute de pression dans le boîtier (12),
- enlèvement de la cloche d'étanchéité,
- montage de la bague d'étanchéité (34).
